# FASCICULE DE BREVET EUROPEEN

(11) **EP 0 392 956 B1**
(45) Date de publication et mention de la délivrance du brevet: **14.12.1994**
(21) Numéro de dépôt: 90500020.4
(22) Date de dépôt: 26.02.1990
(51) Int. Cl.: H02G 3/04

(54) **Dispositif raidisseur de canalisation ou chemins de câbles pour conducteurs électriques et similaires et agrafes correspondantes**
Versteifungsvorrichtung für Kabelkanäle oder Kabelwege und entsprechende Verklammerungen
Device for stiffening of cable channels or ducts for electrical conductors or similar and corresponding clamps

(30) Priorité: 14.04.1989 ES 8901308
(43) Date de publication de la demande: 17.10.1990
(73) Titulaire: APARELLAJE ELECTRICO, S.A., E-08029 Barcelona (ES)
(72) Inventeur: Benito Navazo, Juan Manuel, E-08017 Barcelona (ES)
(74) Mandataire: Curell Sunol, Jorge

(56) Documents cités:
- EP-A- 0 054 456
- DE-U- 7 408 588
- FR-A- 2 387 407
- FR-A- 2 401 376

## Description

La présente invention se rapporte a un dispositif raidisseur de chemins de câbles ou canalisations pour conducteurs électriques et similaires, les canalisations étant du type comprenant: une embase; deux parois latérales qui présentent en leur partie supérieure des premiers moyens d'accouplement; et des cloisons longitudinales intermédiaires munies d'un bord supérieur de section constante, tandis que le dispositif comprend des agraffes de raidissement, dans les extrémités desquelles on prévoit des seconds moyens d'accouplement complémentaires aux premiers moyens, chaque agraffe de raidissement comprenant au moins deux parties, de sorte qu'entre chacune des deux parties contiguës est prévu un espace transversal de séparation qui détermine des tronçons qui sont conjointement disposés en forme de ligne brisée, chaque partie à proximité immédiate de l'autre partie contiguë comportant au moins un élément d'encastrement qui peut être fixé de façon amovible avec un bord supérieur, les éléments d'encastrement des parties contiguës formant des alignements dans les sens transversal, lesquels sont séparés mutuellement par des tronçons d'espace transversal de séparation.

On connaît différents types d'agrafes de raidissement qui se distinguent plus particulièrement par leur forme d'accouplement dans les rebords et cloisons précités. Ainsi, dans la demande de brevet français FR-A-23 87 407 les agrafes sont des pièces aplaties dont les extrémités comportent, soit des crochets pour l'introduction frontale dans les orifices des rebords des parois latérales, soit des saillies en pointe de flèche pour l'insertion dans une fente formée le long du bord des cloisons, avec pénétration et coulissement à partir de zones fendues allongées. Elles comprennent également des butées de retenue définies entre deux saillies de délimitation pour l'accouplement de la pince avec des parois de séparation intermédiaires. Cependant, pour l'assemblage des parois latérales entre elles ou pour l'assemblage d'une paroi latérale avec une paroi de séparation intermédiaire, cette demande enseigne l'utilisation d'agrafes distinctes.

Par ailleurs, le brevet européen 0 054 456 B1 prévoit des agrafes indivisibles qui comportent des zones extrêmes dotées d'une souplesse élastique et de tétons latéraux destinés à pénétrer dans les orifices des rebords par une action de compression et subséquemment par une action d'expansion de la zone élastique. L'inconvénient alors est que l'indivisibilité des agrafes implique la fabrication et l'utilisation d'une variété de types pour les différents cas d'espèce.

On connaît également le modèle d'utilité espagnol 198 439 dans lequel une canalisation est munie de plusieurs barres séparatrices applicables à volonté et qui à l'instar des parois du coffret forment des bords libres avec des trous allongés qui constituent une zone large et une zone étroite pour le positionnement d' agrafes avec des extrémités munies de saillies de section en partie rectangulaire et en partie en pointe de flèche sur un côté et d'autres saillies intermédiaires en pointe de flèche double, avec une rainure pour les séparer en deux, insérables dans les orifices des barres séparatrices. Dans ce cas, l'inconvénient est que l'accouplement des agrafes implique un coulissement de celles-ci le long des bords.

On connaît également la demande de certificat d'addition FR-A-24 25 603 concernant le brevet français FR-A- 24 01 376, dans laquelle il est fait état d'agrafes munies de tétons latéraux dérivés des extrémités d'un corps en forme de H et qui, par flexion et compression des parties extrêmes, permettent l'introduction des tétons dans des orifices en rangées formées dans chaque rebord respectif des parois latérales ou intermédiaires de la canalisation, lesquelles agrafes comportent des pattes de prolongement pour l'assemblage mutuel corrélatif en alignement. Cette façon de procéder entraîne une complication constructive en raison de la constitution particulière des agrafes.

Le document DE-U-7408588 décrit un dispositif de fermeture pour une canalisation d'une installation électrique dans lequel il est prévu que le dispositif soit applicable aux parois latérales et aussi aux cloisons longitudinales intermédiaires. Dans les cas où le dispositif doit être étendu seulement entre une paroi latérale et un cloison intermédiaire, il est prévu qu'il puisse être décomposé en deux ou plus parties. Néanmoins, la configuration du dispositif ne fait pas particulièrement facile ladite décomposition.

La présente invention a pour but de supprimer les inconvénients précités en permettant l'accouplement direct des agrafes dans les points appropriés de la canalisation et en outre en évitant l'obligation de fabriquer une diversité de types d'agrafes ou d'éléments accessoires pour celles-ci.

L'objectif precité est atteint grâce a un dispositif du type mentioné au début de la description, caracterisé en ce que chacune des deux parties contiguës sont respectivement réunis entre elles par des aillettes latérales rendues solidaires de chacune des parties contiguë par l'intermédiare d'une zone de faible résistance.

D'autres avantages de l'invention ressortiront de la description suivante, dans laquelle, sans aucun caractère limitatif, il est fait état d'un mode de réalisation préféré de l'invention avec référence aux dessins d'accompagnement dans lesquels :

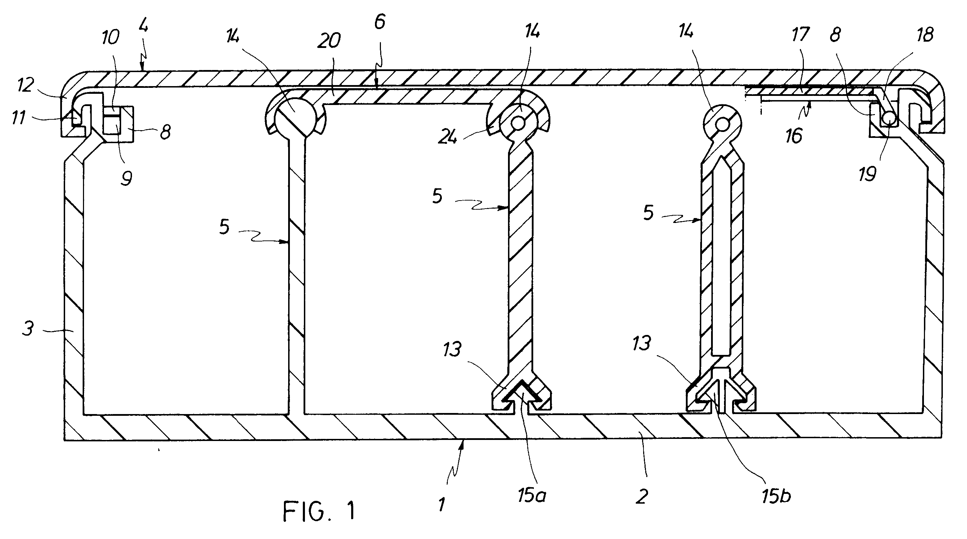

- la figure 1 est une coupe transversale d'une canalisation pour conducteurs électriques, munie de cloisons longitudinales, d'un couvercle et de parties d'agrafes de raidissement ;
- la figure 2 est une vue en perspective d'une agrafe de raidissement munie de parties intermédiaires ;
- la figure 3 est une vue en plan de la même agrafe ;
- la figure 4 est une vue en plan d'une agrafe de raidissement formée uniquement par deux parties extrêmes ;
- la figure 5 est une coupe selon la ligne V-V de la figure 3 ;
- la figure 6 est une vue en perspective partielle de l'agrafe, partiellement sectionnée ;
- la figure 7 est une vue partielle en perspective à grande échelle de l'agrafe avec deux de ses ailettes latéralement rompues en partie pour obtenir sa séparation ;
- la figure 8 est une vue en perspective d'une agrafe après séparation ; et
- la figure 9 est une vue en perspective d'une canalisation dans laquelle sont montées des agrafes.

L'invention est applicable aux canalisations 1 qui comprennent une embase 2 et deux parois latérales 3, et peuvent être recouvertes d'un couvercle 4 ; ces canalisations sont destinées à loger des conducteurs électriques, téléphoniques ou autres, qui sont répartis selon les nécessités et sont de forme quelconque, dans des compartiments séparés par des cloisons longitudinales intermédiaires 5.

Plus particulièrement, l'invention se rapporte au raidissement entre parois 3 et/ou cloisons 5 au moyen d'agrafes 6. Ces parois présentent dans la partie supérieure des premiers moyens d'accouplement qui, de préférence, se caractérisent en ce que dans le bord intérieur ces parois 3 comportent un élément tubulaire 8 dont le creux 9 communique dans la partie supérieure avec l'extérieur par des ouvertures 10 qui de préférence sont espacées régulièrement. Le couvercle 4, d'une façon connue en soi, comporte des ailes 12 munies d'un rebord rentrant qui permet l'ajustement par rapport aux brides 11 dont sont dotées les parois latérales 3.

Les cloisons intermédiaires 5 présentent un bord supérieur 14 de section constante, de préférence, convexe et pouvant être circulaire, comme cela est représenté sur les figures, ou encore de forme polygonale ; de même, on prévoit que le bord peut être plein ou creux, pareillement à la cloison elle-même. Dans certains modes de réalisation, la cloison forme une seule pièce avec l'embase 2 de la canalisation ; dans d'autres, la cloison 5 présente dans sa partie inférieure une pince terminale 13 qui peut être accouplée soit à une pointe formant un double-harpon 15a soit à deux pointes 15b disposées symétriquement.

L'agrafe 6 présente des seconds moyens d'accouplement complémentaires aux premiers moyens, et de préférence les seconds moyens consistent en des parties extrêmes 16 qui d'une façon connue per se, comportent une embase 17 d'épaisseur réduite qui facilite la flexion de celles-ci afin de rapprocher entre elles les pattes extrêmes 18 ; l'effort pour obtenir cette flexion est facilité par l'existence des ailes 25 ; chaque pattes est munie d'un téton extérieur 19 s'étendant en relation opposée et pouvant être introduit dans les ouvertures 10 contiguës aux éléments tubulaires 8 situés dans le bord intérieur d'une paroi latérale 3.

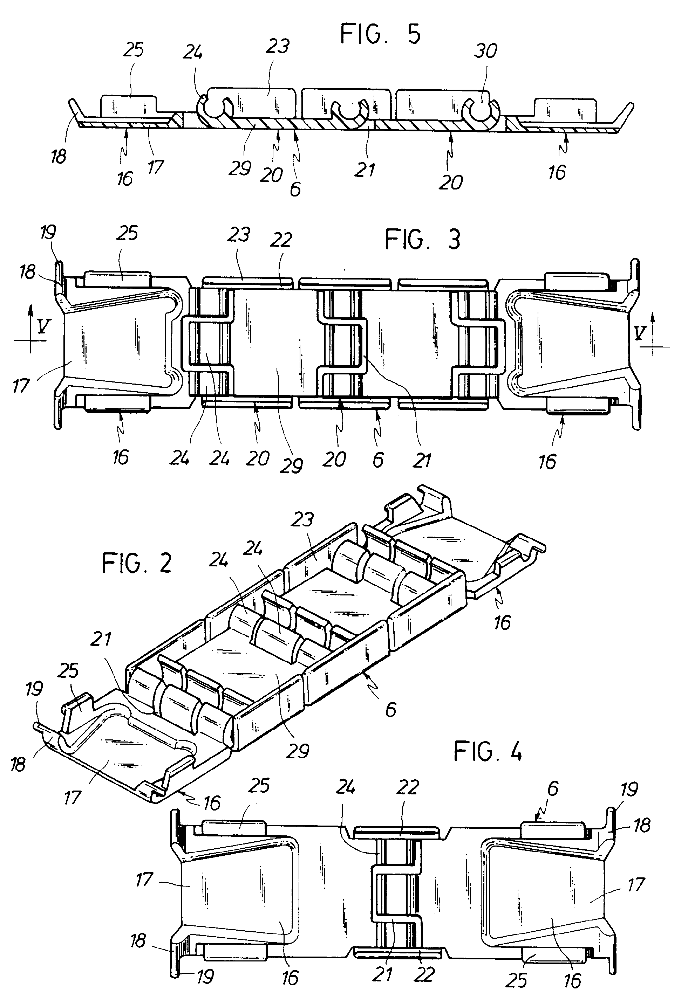

L'agrafe 6 peut comprendre uniquement deux parties extrêmes 16 (figure 4) ou présenter en outre une ou plusieurs parties intermédiaires 20 qui constituent une embase 29 ; dans tous les cas, entre respectivement deux parties consécutives (à savoir, les deux parties extrêmes 16, les deux parties intermédiaires 20 ou une partie extrême 16 et une partie intermédiaire 20) se trouve un espace transversal de séparation 21 qui détermine des tronçons disposés en forme de ligne brisée, de sorte que certains ont évidemment une orientation autre que transversale.

La réunion et la rigidité entre deux parties contiguës respectives est obtenue à l'aide d'ailettes latérales 23 qui sont rendues solidaires à la fois avec chacune des parties contiguës 16, 20. De préférence, cette solidarisation s'effectue à travers une zone de faible résistance comme par exemple un sillon 22 (figure 3).

Chaque partie 16, 20, à proximité immédiate de l'autre partie contiguë comporte au moins un élément d'encastrement pouvant être fixé de façon amovible avec un bord supérieur 14 ; de préférence, ces éléments d'encastrement consistent en une bride 24 de section concave apte à s'appliquer sur un bord 14 d'une cloison intermédiaire 5, l'entourant de façon blocable. Les brides 24 des parties contiguës déterminent des alignements transversaux et sont séparées par les tronçons de l'espace tranversal de séparation correspondant 21 ; la section de ces brides est de forme et de dimensions en conformité avec la forme et les dimensions des bords 14 et il est prévu que cette section, particulièrement celle de sa surface interne concave, est de forme circulaire ou polygonale et que l'ouverture 30 de la bride (figure 5) est moins large que la dimension diamétrale de la bride proprement dite. Par ailleurs, il est préférable que la ou les brides 24 d'une partie 16, 20 soient intercalées avec celles de la partie contiguë.

L'agrafe 6 peut être utilisée dans sa totalité, celle-ci s'étendant entre les parois latérales 3 ; comme il est déjà connu, l'accouplement d'une partie extrême 16 d'une agrafe 6 avec une paroi latérale 3, s'effectue en exerçant une pression sur cette partie extrême par les ailes 25, ce qui permet ainsi de replier l'agrafe sur sa base 17, rapprochant ainsi les tétons 19 ; les deux tétons d'une même partie extrême 16 peuvent alors être introduits dans les ouvertures consécutives 10 et lorsque l'on cesse la pression sur les ailes 25, les tétons 19 se séparent de nouveau, se retrouvant à l'intérieur du creux 9, l'agrafe restant fixée à demeure.

Les brides 24 de l'agrafe 6 s'appliquent sur les bords 14 grâce à l'alignement défini par les brides des deux parties 16,20 contiguës.

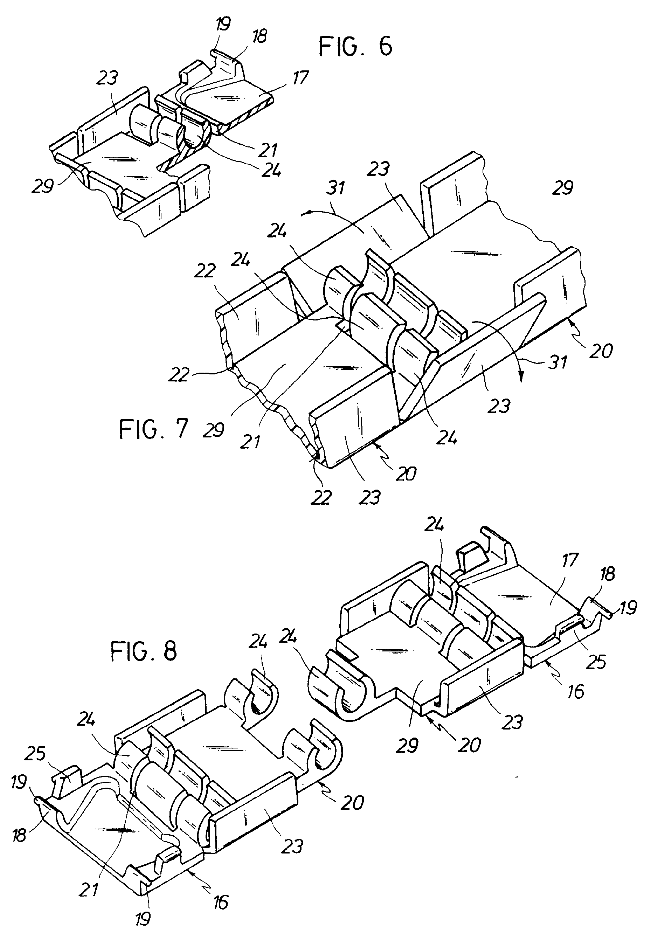

Lorsque l'on souhaite utiliser l'agrafe 6, que ce soit entre les cloisons intermédiaires 5 ou entre une cloison intermédiaire 5 et une paroi latérale 3, on replie d'abord une paire d'ailes 23 comme cela est indiqué par les flèches 31 de la figure 7. Grâce à cela, les ailes 26 se séparent de l'agrafe 6 en cédant sur le sillon 22 et de cette façon on obtient la séparation des parties contiguës 16, 20. Bien entendu, ce procédé de séparation peut être répété pour chaque paire d'ailes jusqu'à la séparation une par une de chaque partie 16, 20.

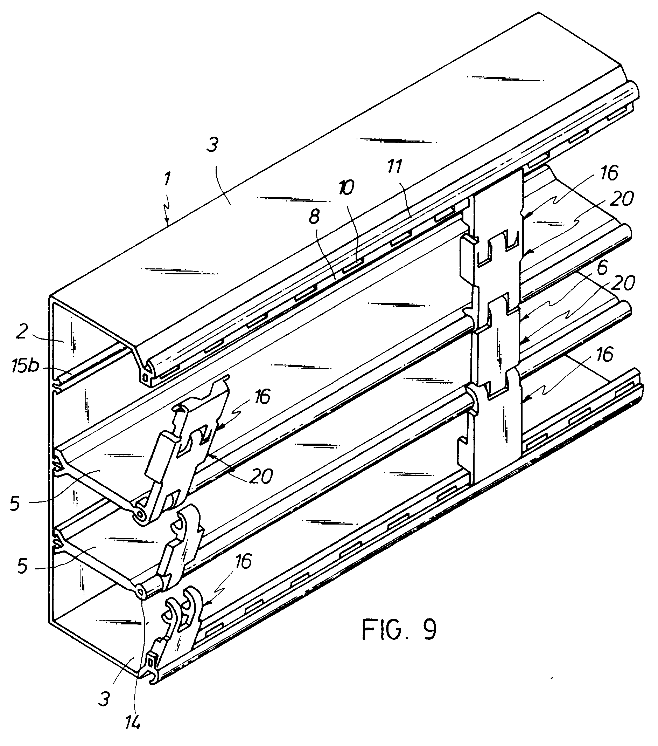

La figure 9 représente différentes formes d'utilisation de l'agrafe 6, soit dans son ensemble, soit de façon séparée de ses parties 16, 20. Ces parties peuvent s'utiliser indifféremment sous forme individuelle, groupée, par deux, trois ou quatre, dans l'exemple illustré.

Compte tenu des caractéristiques constructives et de l'emploi des agrafes 6, il convient de citer les avantages obtenus par rapport à des articles analogues employés communément. Sur le plan constructif, l'avantage fondamental est l'obtention d'un seul type d'agrafe pour toutes les exigences particulières de leur utilisation dans les canalisations. Sur le plan pratique, un autre avantage découle du fait que les installateurs ne sont plus dans l'obligation de se munir d'une quantité déterminée de pièces détachées spécifiques, étant donné qu'avec les agrafes entières il est désormais possible de ne détacher que celles nécessaires à chaque opération, ce qui permet d'utiliser indistinctement des agrafes complètes ou partielles. Par ailleurs, l'accouplement des agrafes ou parties détachées peut s'effectuer aisément et avec une rigidité assurée.

En particulier, il convient de tenir compte du fait que les lieux où ces agrafes doivent être installées sont généralement d'accès difficile, impliquant souvent l'utilisation d'échelles et autres moyens d'accès ; pour cette raison, les personnes devant effectuer le montage apprécient le fait de ne pas être contraintes de se charger d'une variété de pièces distinctes.

## Revendications

1. Dispositif raidisseur de chemins de câbles ou canalisations pour conducteurs électriques et similaires, les canalisations (1) étant du type comprenant: une embase (2); deux parois latérales (3) qui présentent en leur partie supérieure des premiers moyens d'accouplement; et des cloisons longitudinales intermédiaires (5) munies d'un bord supérieur (14) de section constante, tandis que le dispositif comprend des agraffes de raidissement (6), dans les extrémités desquelles on prévoit des seconds moyens d'accouplement complémentaires aux premiers moyens, chaque agraffe de raidissement (6) comprenant au moins deux parties (16, 20), de sorte qu'entre chacune des deux parties contiguës (16,16; 20,20; 16,20) est prévu un espace transversal de séparation (21) qui détermine des tronçons qui sont conjointement disposés en forme de ligne brisée, chaque partie (16, 20), à proximité immédiate de l'autre partie contiguë (16, 20), comportant au moins un élément d'encastrement qui peut être fixé de façon amovible avec un bord supérieur (14), les éléments d'encastrement (24) des parties contiguës (16,16; 20,20; 16,20) formant des alignements dans les sens transversal, lesquels sont séparés mutuellement par des tronçons d'espace transversal de séparation (21), caracterisé en ce que chacune des deux parties contiguës (16,16; 20,20; 16,20) sont respectivement réunies entre elles par des ailettes latérales (23) rendues solidaires de chacune des parties contiguës (16,16; 20,20; 16,20), par l'intermédiaire d'une zone (22) de faible résistance.

2. Dispositif selon la revendication 1, caractérisé en ce que les premiers moyens d'accouplement comprennent des ouvertures (10) espacées, situées dans la partie supérieure dans un élément tubulaire (8), agencé sur un bord intérieur des parois latérales (3) et les seconds moyens d'accouplement comprennent une paire de tétons (19) qui s'étendent en opposition et qui sont aptes à être introduits dans les ouvertures (10).

3. Dispositif selon la revendication 1 ou 2, caractérisé en ce que les bords supérieurs (14) sont de configuration convexe et les éléments d'encastrement comprennent une bride (24) de section concave pouvant entourer de façon blocable un bord supérieur convexe (14).

4. Dispositif selon l'une quelconque des revendications 1 à 3, caractérisé en ce qu'il comprend uniquement deux parties extrêmes (16).

5. Dispositif selon l'une quelconque des revendications 1 à 3, caractérisé en ce qu'il comprend deux parties extrêmes (16) et au moins une partie intermédiaire (20).

6. Dispositif selon l'une quelconque des revendications 3 à 5, caractérisé en ce que dans chaque alignement de brides (24) sont alternées les brides d'une partie (16, 20) et les brides de la partie contiguë (16, 20).

7. Dispositif selon l'une quelconque des revendications 3 à 6, caractérisé en ce que deux brides (24) alternées respectives sont séparées par un tronçon d'espace transversal de séparation (21).

8. Dispositif selon l'une quelconque des revendications 3 à 7, caractérisé en ce que la section des bords (14) et celle des brides (24) est de forme circulaire.

9. Dispositif selon l'une quelconque des revendications 3 à 8, caractérisé en ce que la section des bords (14) et celle des brides (24) est de forme polygonale.

10. Agrafe de raidissiement de canalisations pour conducteurs électriques et similaires, les canalisations (1) étant du type comprenant: une embase (2); deux parois latérales (3) chacune de celles-ci présentant un bord intérieur dans lequel est prévu un élément tubulaire (8) muni dans sa partie supérieure d'ouvertures (10) espacées; et des cloisons longitudinales intermédiaires (5) munies d'un bord supérieur (14), l'agrafe (6) présentant des parties d'extrémité (16), chacune de ces parties d'extrémité comportant un paire de tétons (19) qui s'étendent en opposition et peuvent être introduits dans les ouvertures (10), l'agrafe étant sensiblement plane, rigide et allongée; pouvant s'étendre transversalement entre les bords intérieurs des parois latérales (3); et comprenant au moins deux parties (16, 20) de sorte qu'entre respectivement deux parties contiguës (16,16; 20,20; 16,20) est prévu un espace transversal de séparation (21) qui détermine des tronçons qui conjointement sont disposés en forme de ligne brisée, chaque partie (16, 20), à proximité immédiate de l'autre partie contiguë (16, 20) comportant au moins une bride (24) qui peut entourer de façon blocable un bord supérieur (14), les brides (24) des parties contiguës formant des alignements dans le sens transversal, lesquels sont mutuellement séparés par des tronçons d'espace transversal de séparation (21), caractérisée en ce que chacune des deux parties contiguës (16,16; 20,20; 16,20) sont respectivement réunies entre elles par des ailettes latérales (23) rendues solidaires de chacune des parties contiguës (16,16; 20,20; 16,20), par l'intermédiaire d'une zone (22) de faible résistance.

## Patentansprüche

1. Vorrichtung zur Versteifung von Kabelwegen oder Kanälen für elektrische Leiter, und ähnliches, wobei die Kanäle (1) einen Typ bilden, der aufweist: ein Bodenteil (2); zwei Seitenwände (3), die an ihrem oberen Abschnitt erste Kopplungseinrichtungen aufweisen; und längsgerichtete Zwischentrennwände (5), die mit einer oberen Kante (14) konstanten Querschnitts versehen sind, während die Vorrichtung Versteifungsklammern (6) aufweist, an deren Enden zweite Kopplungseinrichtungen vorgesehen sind, die den ersten Einrichtungen komplementär sind, wobei jede Versteifungsklammer (6) mindestens zwei Abschnitte (16, 20) aufweist, derart, daß zwischen jedem der beiden angrenzenden Abschnitte (16, 16; 20, 20; 16, 20) ein querverlaufender Trennungsraum (21) vorgesehen ist, der Teilstücke bestimmt, die zusammen in Form einer unterbrochenen Linie angeordnet sind, wobei jeder Abschnitt (16, 20) in unmittelbarer Nähe des anderen angrenzenden Abschnittes (16, 20) mindestens ein Umfassungselement aufweist, das an einer oberen Kante (14) abnehmbar befestigt werden kann, wobei die Umfassungselemente (24) der angrenzenden Abschnitte (16, 16; 20, 20; 16, 20) Fluchtlinien in Querrichtung bilden, die voneinander durch querverlaufende Trennungsraumteilstücke (21) getrennt sind, **dadurch gekennzeichnet**, **daß** jeder der beiden angrenzenden Abschnitte (16, 16; 20, 20; 16, 20) jeweils entsprechend miteinander durch seitliche Flügel (23) verbunden sind, die mit Hilfe einer Zone (22) geringer Festigkeit mit jedem der angrenzenden Abschnitte (16, 16; 20, 20; 16, 20) fest verbunden sind.

2. Vorrichtung nach Anspruch 1, dadurch gekennzeichnet, daß die ersten Kopplungseinrichtungen beabstandete Öffnungen (10) aufweisen, die sich im oberen Abschnitt eines rohrförmigen Elementes (8) befinden, das an einer unteren Kante der Seitenwände (3) angebracht ist, und daß die zweiten Kopplungseinrichtungen ein Paar von Zapfen (19) aufweisen, die sich in entgegengesetzter Richtung erstrecken und geeignet sind, in die Öffnungen (10) eingeführt zu werden.

3. Vorrichtung nach Anspruch 1 oder 2, dadurch gekennzeichnet, daß die oberen Kanten (14) eine konvexe Konfiguration aufweisen, und die Umfassungselemente einen Flansch (24) mit konkavem Querschnitt aufweisen, der in blockierbarer Weise eine konvexe obere Kante (14) umgeben kann.

4. Vorrichtung nach irgendeinem der Ansprüche 1 bis 3, dadurch gekennzeichnet, daß sie nur zwei Endabschnitte (16) aufweist.

5. Vorrichtung nach irgendeinem der Ansprüche 1 bis 3, dadurch gekennzeichnet, daß sie zwei Endabschnitte (16) und mindestens einen Mittelabschnitt (20) aufweist.

6. Vorrichtung nach irgendeinem der Ansprüche 3 bis 5, dadurch gekennzeichnet, daß sich in jeder Fluchtlinie der Flansche (24) die Flansche eines Abschnittes (16, 20) und die Flansche des angrenzenden Abschnittes (16, 20) abwechseln.

7. Vorrichtung nach irgendeinem der Ansprüche 3 bis 6, dadurch gekennzeichnet, daß die beiden jeweiligen, einander abwechselnden Flansche (24) durch einen querverlaufenden Trennungsraumabschnitt (21) getrennt sind.

8. Vorrichtung nach irgendeinem der Ansprüche 3 bis 7, dadurch gekennzeichnet, daß der Querschnitt der Kanten (14) und derjenige der Flansche (24) kreisförmig ausgebildet ist.

9. Vorrichtung nach irgendeinem der Ansprüche 3 bis 8, dadurch gekennzeichnet, daß der Querschnitt der Kanten (14) und derjenige der Flansche (24) polygonal ausgebildet ist.

10. Klammer zur Versteifung von Kanälen für elektrische Leiter, und ähnliches, wobei die Kanäle (1) von einem Typ sind, die aufweist:
ein Bodenteil (2); zwei Seitenwände (3), von denen jede eine innere Kante aufweist, an der ein rohrförmiges Element (8) vorgesehen ist, das in seinem oberen Abschnitt mit beabstandeten Öffnungen (10) versehen ist; und längsgerichteten Zwischentrennwänden (5), die mit einer oberen Kante (14) versehen sind, wobei die Klammer (6) Endabschnitte (16) aufweist, wobei jeder dieser Endabschnitte ein Paar von Zapfen (19) umfaßt, die sich in entgegengesetzte Richtungen erstrecken und in die Öffnungen (10) eingeführt werden können, wobei die Klammer im wesentlichen eben, steif und länglich ausgebildet ist; sich quer zwischen den inneren Kanten der Seitenwände (3) erstrecken kann; und mindestens zwei Abschnitte (16, 20) umfaßt, derart, daß zwischen jeweils zwei angrenzenden Abschnitten (16, 16; 20, 20; 16, 20) ein querverlaufender Trennungsraum (21) vorgesehen ist, der Teilstücke bestimmt, die zusammengenommen in Form einer unterbrochenen Linie angeordnet sind, wobei jeder Abschnitt (16, 20) in unmittelbarer Nähe des anderen angrenzenden Abschnittes (16, 20) mindestens einen Flansch (24) aufweist, der in blockierbarer Weise eine obere Kante (14) umfassen kann, wobei die Flansche (24) der angrenzenden Abschnitte Fluchtlinien in der Querrichtung bilden, die gegenseitig durch querverlaufende Trennungsraumteilstücke (21) getrennt sind, dadurch gekennzeichnet, daß jeder der angrenzenden Abschnitte (16, 16; 20, 20; 16, 20) jeweils entsprechend miteinander durch seitliche Flügel (23) verbunden sind, von denen jeder durch eine Zone (22) geringer Festigkeit mit den angrenzenden Abschnitten (16, 16; 20, 20; 16, 20) fest verbunden ist.

## Claims

1. Reinforcing device for cable troughs or ducts for electrical conductors and the like, the ducts (1) being of the type comprising: a base (2); two side walls (3) which have first coupling means in their upper portion; and intermediate longitudinal partitions (5) provided with an upper edge (14) of constant section, while the device comprises reinforcing clips (6), in the ends of which are provided second coupling means complementary to the first means, each reinforcing clip (6) comprising at least two portions (16, 20), so that between each of the two adjacent portions (16, 16; 20, 20; 16, 20) is provided a transverse separating space (21) which determines sections which are jointly arranged in the form of a broken line, each portion (16, 20) in the immediate proximity of the other adjacent portion (16, 20) comprising at least one embedding element which can be fixed removably to an upper edge (14), the embedding elements (24) of the adjacent portions (16, 16; 20, 20; 16, 20) forming alignments in the transverse direction, which are mutually separated by sections of the transverse separating space, characterised in that each of the two adjacent portions (16, 16; 20, 20; 16, 20) are respectively connected to each other by side wings (23) rendered integral with each of the adjacent portions (16, 16; 20, 20; 16, 20), by means of a low-strength zone (22).

2. Device according to claim 1, characterised in that the first coupling means comprise spaced-apart openings (10), situated in the upper portion in a tubular element (8) arranged on an inner edge of the side walls (3), and the second coupling means comprise a pair of lugs (19) which extend in opposition and which are capable of being introduced into the openings (10).

3. Device according to claim 1 or 2, characterised in that the upper edges (14) are of convex configuration and the embedding elements comprise a clamp (24) of concave section capable of surrounding in lockable fashion a convex upper edge (14).

4. Device according to any of claims 1 to 3, characterised in that it comprises only two end portions (16).

5. Device according to any of claims 1 to 3, characterised in that it comprises two end portions (16) and at least one intermediate portion (20).

6. Device according to any of claims 3 to 5, characterised in that the clamps of one portion (16, 20) and the clamps of the adjacent portion (16, 20) are alternated in each alignment of clamps (24).

7. Device according to any of claims 3 to 6, characterised in that two respective alternate clamps (24) are separated by a section of the transverse separating space (21).

8. Device according to any of claims 3 to 7, characterised in that the section of the edges (14) and that of the clamps (24) is of circular shape.

9. Device according to any of claims 3 to 8, characterised in that the section of the edges (14) and that of the clamps (24) is of polygonal shape.

10. Reinforcing clip for ducts for electrical conductors and the like, the ducts (1) being of the type comprising: base (2); two side walls (3) each of them having an inner edge in which is provided a tubular element (8) provided in its upper portion with spaced-apart openings (10); and intermediate longitudinal partitions (5) provided with an upper edge (14), the clip (6) having end portions (16), each of these end portions comprising a pair of lugs (19) which extend in opposition and can be introduced into the openings (10), the clip being substantially plane, rigid and elongated; capable of extending transversely between the inner edges of the side walls (3); and comprising at least two portions (16, 20) so that between respectively two adjacent portions (16, 16; 20, 20; 16, 20) is provided a transverse separating space (21) which determines sections which are jointly arranged in the form of a broken line, each portion (16, 20) in the immediate proximity of the other adjacent portion (16, 20) comprising at least one clamp (24) which can surround an upper edge (14) in lockable fashion, the clamps (24) of the adjacent portions forming alignments in the transverse direction, which are mutually separated by sections of the transverse separating space (21), characterised in that each of the two adjacent portions (16, 16; 20, 20; 16, 20) are respectively connected to each other by side wings (23) rendered integral with each of the adjacent portions (16, 16; 20, 20; 16, 20), by means of a low-strength zone (22).
